# FASCICULE DE BREVET EUROPEEN

(11) **EP 2 114 723 B1**
(45) Date de publication et mention de la délivrance du brevet: **04.05.2011**
(21) Numéro de dépôt: 08775660.7
(22) Date de dépôt: 03.03.2008
(51) Int. Cl.: B60N 2/015

(54) **AGENCEMENT DE FIXATION D'UN SIEGE D'UN VEHICULE AUTOMOBILE**
ANORDNUNG ZUR BEFESTIGUNG EINES FAHRZEUGSITZES
ARRANGEMENT FOR ATTACHING THE SEAT OF AN AUTOMOBILE

(30) Priorité: 06.03.2007 FR 0753659
(43) Date de publication de la demande: 11.11.2009
(73) Titulaire: Renault SAS, 92100 Boulogne Billancourt (FR)
(72) Inventeur: RIOULT, Olivier, F-78960 Voisins Le Bretonneux (FR)
(74) Mandataire: Religieux, Vincent
(86) Numéro de dépôt international: PCT/FR2008/050355
(87) Numéro de publication internationale: WO 2008/122737

(56) Documents cités:
- EP-A- 1 391 368
- DE-A1- 10 254 492
- DE-A1-102005 019 078

## Description

La présente invention concerne un agencement de fixation de siège et plus particulièrement un agencement de fixation d'un siège par rapport à un élément de structure de caisse d'un véhicule, dans lequel au moins un moyen de verrouillage est apte à assurer la fixation dudit siège et est solidaire d'un élément de support, cet élément de support étant maintenu en position par rapport à l'élément de structure de caisse.

Le document EP-A-1391368 montre un agencement de fixation comportant une pièce étanche avec des éléments de fixation placée entre un longeron de la structure de chassis et la traverse support de siège.

Il est connu d'utiliser pour la fixation de siège des systèmes de verrouillage soudés sur des éléments solidaires de la caisse du véhicule.

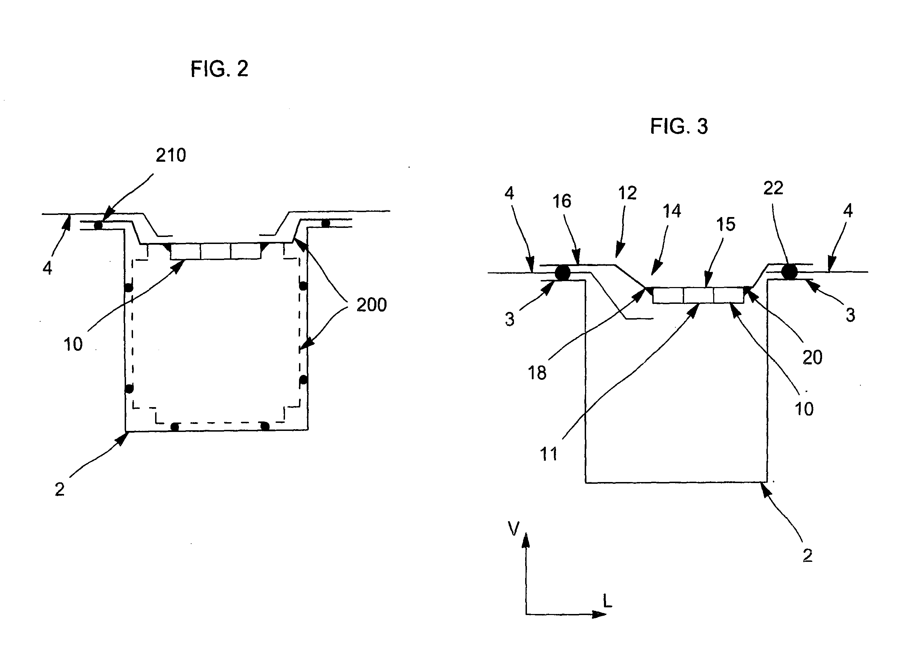

De façon classique, et tel que représenté à la figure 2, ces systèmes de verrouillage sont associés à la caisse du véhicule par l'intermédiaire d'un boîtier 200 soudé 210 dans une traverse 2. Ces systèmes de verrouillage présentent l'inconvénient d'ajouter à la structure du véhicule des pièces contraignantes pour le volume alloué dans la zone, et/ou contraignantes pour la masse du véhicule. Dans cet agencement connu, le plancher 4 repose sur le boîtier 200. Seuls la traverse 2 et le boîtier 200 sont soudés par des points de soudure communs, du fait de la faible épaisseur du plancher et du risque de l'endommager.

Un des objectifs de l'invention est donc de proposer un agencement de fixation de siège qui permette une fixation sure du siège, apte à encaisser les efforts, mais qui, en réponse à des objectifs que l'on retrouve invariablement chez les différents constructeurs automobiles, soit peu coûteuse et peu encombrante.

Pour répondre à ces objectifs, l'invention propose un agencement tel que décrit précédemment, et caractérisé en ce que l'élément de support, le plancher du véhicule et l'élément de structure sont solidarisés par une soudure commune.

Selon différentes caractéristique de la présente invention :
- le plancher est positionné entre l'élément de support et l'élément de structure ;
- le moyen de verrouillage est un élément cylindrique, et en ce qu'il est soudé sur l'élément de support par trois cordons de soudure disposés à 120° ;
- l'élément de support présente la forme d'une plaque, comprenant des bords sensiblement plan, et une partie centrale formée d'au moins un embouti auquel est associé au moins un moyen de verrouillage ;
- l'embouti est orienté verticalement de sorte que, lorsque les bords de l'élément de support sont solidaires des feuillures de la traverse, l'embouti et le moyen de verrouillage correspondant sont situés dans le volume de l'élément de structure ;
- deux éléments de support distincts sont disposées sur un même élément de structure, chaque élément de support portant un élément de verrouillage apte à assurer la fixation du même siège du véhicule

L'invention vise également un véhicule automobile, qui comporte deux sièges indépendants fixés selon un agencement tel qu'évoqué ci dessus, et qui comporte trois éléments de support, dont un élément de support central comportant deux moyens de verrouillage.

D'autres avantages de l'invention apparaîtront à la lecture de la description détaillée qui suit pour la compréhension de laquelle on se reportera aux dessins annexés dans lesquels :
- la figure 1 est une représentation schématique d'un ensemble de siège arrière indépendants, et d'un agencement de fixation de ces sièges selon la présente invention ;
- la figure 2 est une représentation d'agencement de fixation selon l'art antérieur ;
- la figure 3 est une vue en coupe de l'agencement de fixation représenté à la figure 1 ;
- la figure 4 est une représentation de l'agencement de fixation de la figure 1, sans l'ensemble de siège.
- la figure 5 est une représentation schématique d'un élément de support central selon l'invention, vu de dessous ;
- la figure 6 est une représentation schématique d'un élément de support latéral, vu de dessus.

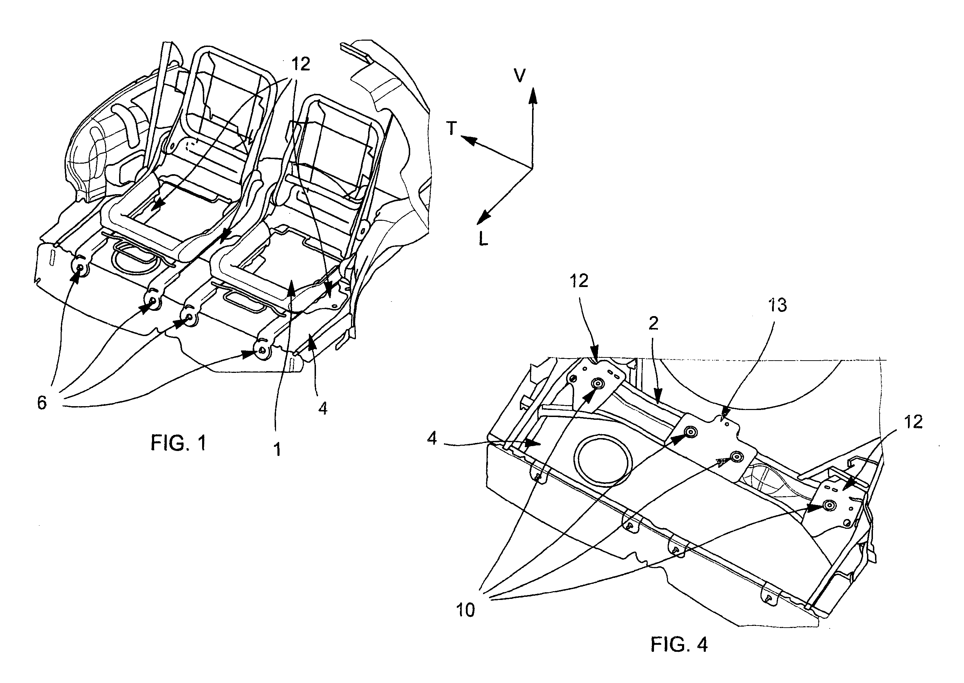

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

La présente invention vise à protéger un agencement de fixation d'un siège 1 de véhicule automobile. Dans l'exemple de réalisation qui va suivre, l'agencement de fixation est décrit relativement à un siège 1 arrière indépendant d'un deuxième siège arrière. Il sera compris que cet agencement peut être appliqué à tout siège d'un véhicule, notamment un siège avant, ou une banquette de sièges arrière, et qu'un agencement de fixation selon l'invention peut être combiné à d'autres moyens de fixation pour les autres points de fixation de ce même siège.

Tel que représentée à la figure 1, la fixation d'un siège 1 se fait par deux points de fixation avant 6 vissés de façon connue à la structure du véhicule et deux points de fixation arrière. Ces deux points de fixation arrière sont composés de deux systèmes de verrouillage associés au siège et non représentés, à titre d'exemple des systèmes dits « ballfix », ces systèmes de verrouillage étant aptes à coopérer avec des moyens de verrouillage 10 associés à la structure de caisse.

Selon la présente invention, les moyens de verrouillage 10 sont soudés sur un élément de support 12, 13. Tel que représenté aux figures 1 et 4, un unique moyen de verrouillage 10 peut être associé à un unique élément de support 12, ou au moins deux moyens de verrouillage 10 peuvent être soudés sur un même élément de support 13.

Selon la présente invention, chaque moyen de verrouillage 10 se présente sous la forme d'un élément cylindrique, muni en son centre d'un alésage 11 apte à coopérer avec les systèmes de verrouillage associés au siège 1 et non représentés. Chaque élément cylindrique est en appui contre la face inférieure 18 d'un élément de support 12, 13, et positionné pour que l'alésage 11 de l'élément cylindrique formant le moyen de verrouillage 10 corresponde à un orifice 15 réalisé dans l'élément de support 12, 13, de sorte que le système de verrouillage associé au siège puisse être inséré dans cet alésage 11 par une action verticale de haut en bas.

Les dimensions de chaque orifice 15 des éléments de support 12, 13 sont étudiées pour que d'une part l'alésage 11 des moyens de verrouillage 10 soit complètement découvert et accessible, et que d'autre part des cordons de soudure 20 puissent être réalisés au contact de la face inférieure 18 de l'élément de support 12, 13 et du pourtour de l'élément cylindrique formant le moyen de verrouillage 10. Selon un mode de réalisation de l'invention, trois cordons de soudure 20 à l'arc sont réalisés pour solidariser l'élément cylindrique formant le moyen de verrouillage 10 à l'élément de support 12, 13. Ces trois cordons 20 sont alors disposés régulièrement sur le pourtour de l'élément cylindrique, disposés à 120°. A titre d'exemple, ces cordons de soudure peuvent être des cordons SEFG, des cordons de soudure électrique à l'arc avec fil électrode et sous protection gazeuse.

La dimension longitudinale de chaque élément de support 12, 13 est au moins égale à la dimension longitudinale de l'élément de structure correspondant 2, de sorte que les bords 16 correspondants aux extrémités longitudinales de chaque élément de support puissent reposer et être fixées sur des feuillures 3 de l'élément de structure correspondant 2.

Selon l'invention, chaque élément de support 12, 13 est formée d'une plaque de bords 16 sensiblement plan, et d'au moins une partie centrale formée par un embouti 14 de sorte que cette partie centrale est située dans un plan d'altitude inférieure au plan comprenant les bords 16 de la laque et donc des feuillures 3 de l'élément de structure correspondant 2. Tel que représenté sur la figure 3, la face inférieure 18 de cette partie centrale, sur laquelle est soudée le moyen de verrouillage 10, est alors disposé sensiblement dans le volume de l'élément de structure correspondant 2 lorsque l'élément de support 12, 13 est solidarisé à cet élément de structure 2. Une telle position est avantageuse à plusieurs points, car elle permet d'une part d'impacter sur la position finale verticale de l'occupant du siège, et permet d'autre part d'augmenter la tenue aux efforts du siège 1. En effet, le fait que le moyen de verrouillage 10 soit au plus près de l'élément de structure correspondant 2 induit des moments réduits par rapport à un agencement dans lequel le moyen de verrouillage 10 est surélevé.

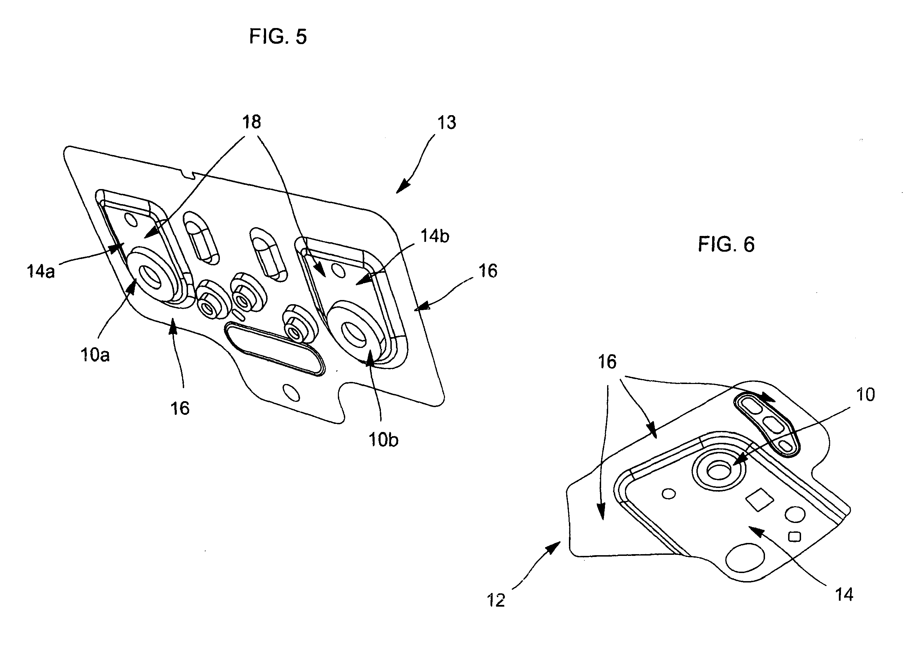

Selon un mode de réalisation de l'invention, représenté sur les figures 4, 5 et 6, un élément de support central 13 est disposé transversalement sensiblement au centre de la traverse formant l'élément de structure correspondant 2 et porte deux moyens de verrouillage 10. Deux éléments de support latéraux 12 sont disposés transversalement sensiblement aux extrémités de la traverse, et porte chacune un moyen de verrouillage 10. Dans les différents cas, chaque plaque support comprend selon l'invention un embouti 14 sur la face inférieure 18 duquel le moyen de verrouillage 10 est soudé. L'élément de support central 13 comprend ainsi, tel que représenté plus précisément à la figure 5, deux emboutis 14a, 14b distincts auxquels un moyen de verrouillage 10a, 10b est associé. Toutefois, il sera compris que sans sortir du contexte de l'invention, un embouti unique pourrait être formé dans la plaque support centrale, cet embouti unique portant les deux moyens de verrouillage associés à la plaque support centrale.

Chaque élément de support 12, 13 est soudé avec le plancher 4 et l'élément de structure correspondant 2, par des points de soudure 22 aptes à solidariser trois épaisseurs. Tel que représenté à la figure 4, l'empilement dans l'agencement est tel que le plancher 4 est positionné entre la plaque support 12, 13 et les feuillures 3 de l'élément de structure correspondant 2, et des points de soudure trois épaisseurs 22 peuvent alors être effectués, puisque la chaleur dégagée lors de la soudure n'impacte pas directement le plancher 4 mais la pièce supérieure, à savoir la plaque support 12, 13 dont le matériau et l'épaisseur permet de supporter la chaleur dégagée.

L'amplitude des éléments de support 12, 13 selon la direction transversale permet de souder le nombre suffisant de points de soudure trois épaisseurs 22, afin de permettre la tenue de l'ensemble aux différents cas de charges.

Chaque point de soudure 22 est alors réalisé pour souder en trois épaisseurs, l'élément de structure correspondant 2, le plancher 4 du véhicule et la plaque 12, 13 portant le système de verrouillage 10. Dans l'exemple représenté sur les figures, l'élément de structure correspondant 2 est la traverse centrale arrière et le plancher est découpé pour permettre le passage de la plaque support et du moyen de verrouillage.

## Revendications

1. Agencement de fixation d'un siège (1) par rapport à un élément de structure (2) de caisse d'un véhicule, dans lequel au moins un moyen de verrouillage (10) est apte à assurer la fixation dudit siège (1) et est solidaire d'un élément de support (12, 13), cet élément de support (12, 13) étant maintenu en position par rapport à l'élément de structure (2) de caisse, **caractérisé en ce que** l'élément de support (12, 13), le plancher (4) du véhicule et l'élément de structure (2) sont solidarisés par une soudure commune (22).

2. Agencement selon la revendication 1, **caractérisé en ce que** le plancher (4) est positionné entre l'élément de support (12, 13) et l'élément de structure (2).

3. Agencement selon la revendication 1 ou 2, **caractérisé en ce que** le moyen de verrouillage (10) est un élément cylindrique, et **en ce qu'**il est soudé sur l'élément de support (12, 13) par trois cordons de soudure (20) disposés à 120°.

4. Agencement selon l'une des revendications 1 à 3, **caractérisé en ce que** l'élément de support (12, 13) présente la forme d'une plaque, comprenant des bords (16) sensiblement plan, et une partie centrale formée d'au moins un embouti (14) auquel est associé au moins un moyen de verrouillage (10).

5. Agencement selon la revendication 4, **caractérisé en ce que** l'embouti (14) est orienté verticalement de sorte que, lorsque les bords (16) de l'élément de support (12, 13) sont solidaires des feuillures (3) de l'élément de structure (2), l'embouti (14) et le moyen de verrouillage (10) correspondant sont situés dans le volume de l'élément de structure (2).

6. Agencement selon l'une des revendications 1 à 5, **caractérisé en ce que** deux éléments de support (12, 13) distincts sont disposées sur un même élément de structure (2), chaque élément de support (12, 13) portant un élément de verrouillage (10) apte à assurer la fixation du même siège (1) du véhicule

7. Véhicule automobile, **caractérisé en ce qu'**il comporte deux sièges (1) indépendants fixés selon un agencement selon l'une des revendications précédentes, et **en ce qu'**il comporte trois éléments de support (12, 13), dont un élément de support central (13) comportant deux moyens de verrouillage (10).

## Claims

1. Arrangement for attaching a seat (1) with respect to a vehicle bodyshell structural element (2), in which at least one locking means (10) is able to attach said seat (1) and is secured to a support element (12, 13), this support element (12, 13) being held in position with respect to the bodyshell structural element (2), **characterized in that** the support element (12, 13), the vehicle floorpan (4) and the structural element (2) are secured together by a common weld (22).

2. Arrangement according to Claim 1, **characterized in that** the floorpan (4) is positioned between the support element (12, 13) and the structural element (2).

3. Arrangement according to Claim 1 or 2, **characterized in that** the locking means (10) is a cylindrical element, and **in that** it is welded to the support element (12, 13) by three welded seams (20) positioned 120° apart.

4. Arrangement according to one of Claims 1 to 3, **characterized in that** the support element (12, 13) is in the form of a plate comprising substantially flat edges (16) and a central part formed of at least one pressing (14) with which at least one locking means (10) is associated.

5. Arrangement according to Claim 4, **characterized in that** the pressing (14) is directed vertically so that, when the edges (16) of the support element (12, 13) are secured to the rebates (3) of the structural element (2), the pressing (14) and the corresponding locking means (10) are situated within the volume of the structural element (2).

6. Arrangement according to one of Claims 1 to 5, **characterized in that** two separate support elements (12, 13) are positioned on one and the same structural element (2), each support element (12, 13) bearing a locking element (10) able to attach the same vehicle seat (1).

7. Motor vehicle, **characterized in that** it comprises two independent seats (1) attached with an arrangement according to one of the preceding claims, and **in that** it comprises three support elements (12, 13), one of these being a central support element (13) comprising two locking means (10).

## Patentansprüche

1. Anordnung zur Befestigung eines Sitzes (1) bezüglich eines Karosserie-Strukturelements (2) eines Fahrzeugs, bei der mindestens eine Verriegelungseinrichtung (10) die Befestigung des Sitzes (1) gewährleisten kann und fest mit einem Tragelement (12, 13) verbunden ist, wobei dieses Tragelement (12, 13) bezüglich des Karosserie-Strukturelements (2) in Stellung gehalten wird, **dadurch gekennzeichnet, dass** das Tragelement (12, 13), der Boden (4) des Fahrzeugs und das Strukturelement (2) durch eine gemeinsame Schweißverbindung (22) fest miteinander verbunden sind.

2. Anordnung nach Anspruch 1, **dadurch gekennzeichnet, dass** der Boden (4) zwischen dem Tragelement (12, 13) und dem Strukturelement (2) positioniert ist.

3. Anordnung nach Anspruch 1 oder 2, **dadurch gekennzeichnet, dass** die Verriegelungseinrichtung (10) ein zylindrisches Element ist, und dass sie an das Tragelement (12, 13) über drei in einem Abstand von 120° angeordnete Schweißnähte (20) geschweißt ist.

4. Anordnung nach einem der Ansprüche 1 bis 3, **dadurch gekennzeichnet, dass** das Tragelement (12, 13) die Form einer Platte hat, die im Wesentlichen ebene Ränder (16) und einen mittleren Bereich enthält, der von mindestens einer Einprägung (14) gebildet wird, der mindestens eine Verriegelungseinrichtung (10) zugeordnet ist.

5. Anordnung nach Anspruch 4, **dadurch gekennzeichnet, dass** die Einprägung (14) senkrecht ausgerichtet ist, so dass, wenn die Ränder (16) des Tragelements (12, 13) fest mit den Falzen (3) des Strukturelements (2) verbunden sind, die Einprägung (14) und die entsprechende Verriegelungseinrichtung (10) sich im Volumen des Strukturelements (2) befinden.

6. Anordnung nach einem der Ansprüche 1 bis 5, **dadurch gekennzeichnet, dass** zwei unterschiedliche Tragelemente (12, 13) auf dem gleichen Strukturelement (2) angeordnet sind, wobei jedes Tragelement (12, 13) ein Verriegelungselement (10) trägt, das die Befestigung des gleichen Sitzes (1) des Fahrzeugs gewährleisten kann.

7. Kraftfahrzeug, **dadurch gekennzeichnet, dass** es zwei unabhängige Sitze (1) aufweist, die gemäß einer Anordnung nach einem der vorhergehenden Ansprüche befestigt sind, und dass es drei Tragelemente (12, 13) aufweist, von denen ein mittleres Tragelement (13) zwei Verriegelungseinrichtungen (10) aufweist.
